# EUROPÄISCHE PATENTSCHRIFT

(11) **EP 2 682 310 B1**
(45) Veröffentlichungstag und Bekanntmachung des Hinweises auf die Patenterteilung: **30.09.2015**
(21) Anmeldenummer: 13003250.1
(22) Anmeldetag: 26.06.2013
(51) Int. Cl.: B60R 21/13

(54) **Rückhaltesystem für einen Fahrer eines Fahrzeugs**
Restraint system for a driver of a vehicle
Système de retenue pour un conducteur de véhicule

(30) Priorität: 03.07.2012 DE 202012006364 U
(43) Veröffentlichungstag der Anmeldung: 08.01.2014
(73) Patentinhaber: HSM Hans Sauermann GmbH & Co. KG, 85119 Ernsgaden (DE)
(72) Erfinder: Sauermann, Hans, 85119 Ernsgaden (DE)
(74) Vertreter: Witzany, Manfred

(56) Entgegenhaltungen:
- EP-A2- 1 623 863
- US-A1- 2004 099 461

## Beschreibung

Die Erfindung betrifft ein Rückhaltesystem für einen Fahrer eines Fahrzeugs, insbesondere eines Flurförderfahrzeugs gemäß dem Oberbegriff des Patentanspruchs 1.

Aus der EP 1 145 919 B1 ist ein Rückhaltesystem bekannt. Es weist einen Schutzbügel auf, der um eine horizontale Achse zwischen einer den Fahrer im Fahrzeug haltenden Rückhaltestellung und einer ein bequemes Ein- und Aussteigen ermöglichenden Freigabestellung verschwenkbar ist.

Aus der EP 1 623 863 A2 ist eine Kabine für einen Fahrer eines Gabelstaplers bekannt. Diese weist vertikale Säulen auf, an der ein Schutzbügel verschwenkbar gehalten ist.

Aus der US 2004/099461 A1 ist ein gattungsgemäßes Rückhaltesystem für einen Fahrer eines Fahrzeugs bekannt. Es weist einen Schutzbügel auf, der um eine horizontale Schwenkachse zwischen einer Rückhaltestellung und einer Freigabestellung verschwenkbar ist. Im Bereich einer Schulter des Fahrers ist außerdem eine vertikal ausgerichtete Stange vorgesehen. Diese Stange befindet sich dabei außerhalb der Schwenkebene des Schutzbügels, so dass der Schutzbügel problemlos an der Stange vorbeischwenken kann. Dieses Rückhaltesystem hat sich in der Praxis bewährt und bildet den Ausgangspunkt der vorliegenden Erfindung.

Der Erfindung liegt die Aufgabe zugrunde, ein Rückhaltesystem der eingangs genannten Art zu schaffen, welches sich durch eine verbesserte Rückhaltewirkung insbesondere bei kleinen Fahrzeugkabinen auszeichnet.

Diese Aufgabe wird erfindungsgemäß mit den Merkmalen des Patentanspruchs 1 gelöst.

Das Rückhaltesystem gemäß Anspruch 1 weist mindestens einen Schutzbügel auf. Dieser Schutzbügel ist um eine in etwa horizontale Schwenkachse zwischen einer den Fahrer im Fahrzeug haltenden Rückhaltestellung und einer ein Ein- und Aussteigen ermöglichenden Freigabestellung verschwenkbar. Dieser Schutzbügel hat die Aufgabe, den Fahrer insbesondere beim Umkippen des Fahrzeugs in der Fahrzeugkabine zu halten und ein Herausschleudern aus der Fahrzeugkabine zuverlässig zu unterbinden. In dieser Rückhaltestellung ist jedoch ein Ein- und Aussteigen des Fahrers nicht mehr möglich, so dass die Verschwenkbarkeit des Schutzbügels unumgänglich ist. Insbesondere bei kleinen Fahrzeugkabinen oder solchen mit ungünstiger Geometrie gerät das Konzept des schwenkbaren Schutzbügels an seine Grenzen. Der Schutzbügel muss in seiner Rückhaltestellung einen hinreichend großen Bereich der Fahrzeugkabinenöffnung überdecken, damit er den Fahrer schützen kann. Andererseits muss der Schutzbügel derart klein bemessen sein, dass er den Fahrer in der Freigabestellung nicht behindert, wobei zusätzlich die Verschwenkbarkeit des Schutzbügels ermöglicht sein muss. Diese Forderungen führen oftmals zu recht kleinen Schutzbügeln, die keine hinreichende Schutzwirkung mehr entfalten können. Als neuralgische Stelle hat sich hierbei insbesondere der Schulterbereich des Fahrers herausgestellt. Ein zu niedriger Schutzbügel im Schulterbereich führt zu dem Problem, dass der Fahrer beim Umkippen des Fahrzeugs über den Schutzbügel katapultiert werden kann. Andererseits befindet sich häufig unmittelbar hinter dem Schulterbereich des Fahrers die B-Säule der Fahrzeugkabine, was den Schwenkbereich des Schutzbügels an dieser Stelle behindert. Zur Lösung dieses Problems weist das Rückhaltesystem mindestens einen fahrzeugfesten Schulterschutz auf, der im Bereich einer Schulter des Fahrers vorgesehen ist. Dieser zusätzliche Schulterschutz überdeckt den kritischen Schulterbereich, ohne selbst mitverschwenkt zu werden. Damit stört eine unmittelbar hinter dem Schulterbereich angeordnete B-Säule den Schulterschutz in keiner Weise, so dass hierdurch die Verschwenkbarkeit des Schutzbügels nicht behindert wird. Um zu verhindern, dass der Schulterschutz selbst den Schwenkbereich des Schutzbügels begrenzt, ist dieser zumindest in einem in axialer Projektion betrachteten Überlappungsbereich zwischen dem mindestens einen Schulterschutz und dem mindestens einen sich in der Freigabestellung befindenden Schutzbügel axial vom Schutzbügel beabstandet. Damit kann der Schutzbügel in seiner Freigabestellung - axial betrachtet - mit dem Schulterschutz überlappen, was einen großen Verschwenkbereich des Schutzbügels garantiert.

Für den Schulterschutz haben sich verschiedene Ausbildungsformen bewährt. Im einfachsten Fall wird ein Netz aufgespannt, welches den Fahrer zurückhält. Dieses Netz wird dann im einfachsten Fall an der Fahrzeugkabine festgelegt. Alternativ oder zusätzlich kann das Netz auch an festen Teilen eines Schwenklagers des schwenkbaren Schutzbügels montiert sein. Für Gitter und Scheiben gelten die gleichen Befestigungsmöglichkeiten wie für das Netz. Ein Bügel wird vorzugsweise an solchen Teilen des Rückhaltesystems festgelegt, die auch das Schwenklager für den verschwenkbaren Schutzbügel tragen. Auf diese Weise ergibt sich ein besonders kompakter Aufbau des Rückhaltesystems. Die verschiedenen beschriebenen Ausbildungsformen für den Schulterschutz können auch in beliebiger Weise kombiniert eingesetzt werden.

Um den kritischen Schulterbereich durch den Schulterschutz möglichst vollständig abzudecken, ist es günstig, wenn der Schulterschutz mindestens einen gekrümmten oder abgewinkelten Abschnitt aufweist. Zur Vermeidung von Verletzungen am Schulterschutz wird dabei eine Krümmung bevorzugt.

Gemäß Anspruch 2 ist es vorteilhaft, wenn der Schulterschutz nahe der Schwenkachse festgelegt ist. Dies ergibt einen verhältnismäßig kleinen Überlappungsbereich und ermöglicht daher einen kompakten Aufbau des Rückhaltesystems.

Da üblicherweise die Schwenkachse des Schutzbügels beträchtlich unterhalb der Schulter des Fahrers angeordnet ist, ist es gemäß Anspruch 3 vorteilhaft, wenn sich der Schutzbügel von einem Festlegungspunkt schräg nach oben und nach vorne erstreckt.

Zur vollständigen Abdeckung des kritischen Schulterbereichs ist es gemäß Anspruch 4 günstig, wenn der Schulterschutz mindestes ein freies Ende aufweist, von dem aus sich der Schulterschutz im Wesentlichen nach vorne erstreckt. Damit ist das freie Ende nahe der B-Säule vorgesehen, in der es zu keinen Verletzungen führen kann.

Zur Erzielung eines kompakten Aufbaus des Rückhaltesystems ist es gemäß Anspruch 5 günstig, wenn der Schutzbügel mindestens eine Abkröpfung aufweist. Auf diese Weise lässt sich die geforderte axiale Beabstandung zwischen Schulterschutz und Schutzbügel im Überlappungsbereich auf sehr kompakte Weise realisieren. Insbesondere ist es in Folge der Abkröpfung nicht mehr erforderlich, dass der gesamte Schutzbügel axial vom Schulterschutz beabstandet ist.

Insbesondere unter beengten Platzverhältnissen ist es zur Erzielung eines kompakten Aufbaus des Rückhaltesystems gemäß Anspruch 6 vorteilhaft, wenn der Schutzbügel mindestens einen Punkt außerhalb des Überlappungsbereichs aufweist, der in einer zur Schwenkachse senkrechten Ebene liegt, welche durch den Schulterschutz verläuft. In diesem mindestens einen Punkt fehlt es demnach an einer axialen Beanstandung zwischen dem Schutzbügel und dem Schulterschutz. Da sich dieser mindestens eine Punkt aber außerhalb des Überlappungsbereichs befindet, wird hierdurch die freie Verschwenkbarkeit des Schutzbügels in keiner Weise beschränkt. Auf diese Weise lässt sich ein sehr schmal bauendes Rückhaltesystem realisieren.

Der Erfindungsgegenstand wird beispielhaft anhand der Zeichnung erläutert, ohne den Schutzumfang zu beschränken.

Es zeigt:
- Figur 1: eine räumliche Darstellung eines Rückhaltesystems in der Rückhaltestellung und
- Figur 2: das Rückhaltesystem gemäß Figur 1 in der Freigabestellung.

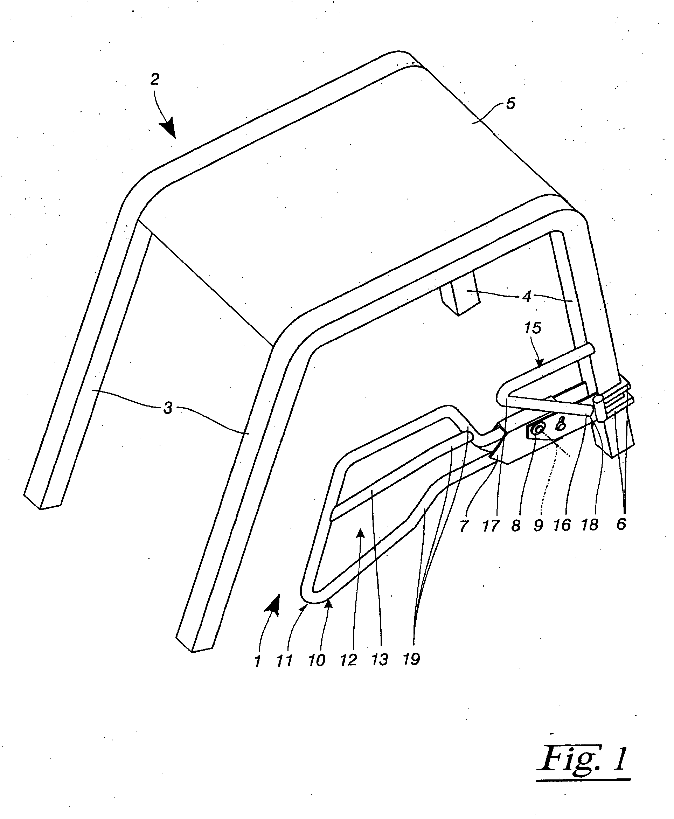

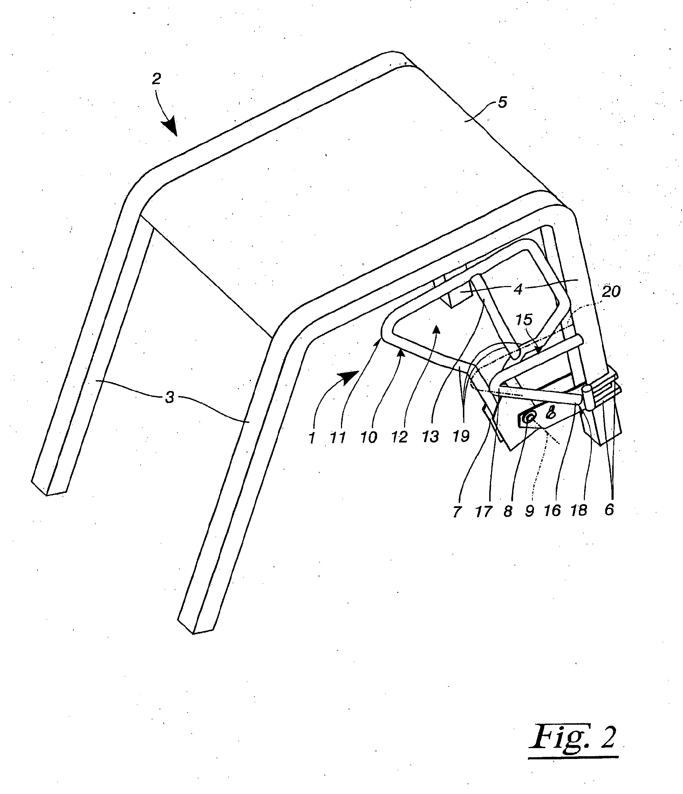

Die Figuren 1 und 2 zeigen räumliche Darstellungen eines Rückhaltesystems 1 für ein lediglich angedeutetes Fahrzeug 2. Das Fahrzeug 2 weist eine Kabine auf, die von vorderen A-Säulen 3 und hinteren B-Säulen 4 sowie einem Dach 5 gebildet ist. An einer der B-Säulen 4 ist das Rückhaltesystem 1 gehalten. Als Haltemittel sind Klemmschellen 6 angedeutet, wobei alternativ auch andere Haltemittel wie beispielsweise Schrauben in Gewindebohrungen möglich sind.

Das Rückhaltesystem 1 weist eine Kassette 7 auf, in der ein Schwenklager 8 vorgegeben ist. Dieses Schwenklager 8 definiert eine Schwenkachse 9, um die ein Schutzbügel 10 verschwenkbar gehalten ist. In der in Figur 1 dargestellten Rückhaltestellung überdeckt der Schutzbügel 10 nahezu alle relevanten Bereiche der Kabine des Fahrzeugs 2, um den Fahrer bei einem Unfall in der Kabine zu halten. Zu diesem Zweck ist der Schutzbügel 10 im vorderen Bereich 11 nach unten gezogen und über mehr als die Hälfte seiner Längserstreckung nach oben gezogen. Ein hierdurch gebildeter Freiraum 12 wird durch eine zusätzliche Strebe 13 gesichert. Diese Strebe 13 verhindert, dass der Fahrer durch diesen Freiraum 12 hindurchrutschen kann.

Um einen kritischen Schulterbereich 14 zu sichern, ist ein zusätzlicher Schulterschutz 15 vorgesehen. Dieser Schulterschutz 15 ist an der Kassette 7 nahe der Schwenkachse 9 festgelegt und verschwenkt nicht mit dem Schutzbügel 10. Der Schulterschutz 15 erstreckt sich vom Festlegungspunkt 16 aus betrachtet nach vorne und oben. Er weist einen gekrümmten Abschnitt 17 auf, in dem er nach hinten umgelenkt wird. Ein freies Ende 18 des Schulterschutzes 15 ist nahe der B-Säule 4 vorgesehen. Damit schützt der Schulterschutz 15 den gefährdeten Schulterbereich 14 des Fahrers und verhindert, dass der Fahrer in diesem Bereich über den Schutzbügel 10 katapultiert wird.

Um zu verhindern, dass der Schwenkbereich des Schutzbügels 10 durch den Schulterschutz 15 beschränkt wird, weist der Schutzbügel 10 Kröpfungen 19 auf. Durch diese Kröpfungen ist sichergestellt, dass der Schutzbügel 10 in einem in Figur 2 dargestellten Überlappungsbereich 20 axial vom Schulterschutz 15 beabstandet ist. Außerhalb des Überlappungsbereichs 20 besteht keine Kollisionsgefahr mit dem Schulterschutz 15, so dass hier der Schutzbügel 10 in der Ebene des Schulterschutzes 15 vorgesehen ist. Alternativ zu einer Kröpfung 19 kann der gesamte Schutzbügel 10 auch axial zum Schulterschutz 15 versetzt sein. Dies führt allerdings zu einem breiteren Aufbau des Rückhaltesystems 1.

### Bezugszeichenliste

- 1: Rückhaltesystem
- 2: Fahrzeug
- 3: A-Säule
- 4: B-Säule
- 5: Dach
- 6: Klemmschelle
- 7: Kassette
- 8: Schwenklager
- 9: Schwenkachse
- 10: Schutzbügel
- 11: vorderer Bereich
- 12: Freiraum
- 13: Strebe
- 14: Schulterbereich
- 15: Schulterschutz
- 16: Festlegungspunkt
- 17: gekrümmter Abschnitt
- 18: freies Ende
- 19: Kröpfung
- 20: Überlappungsbereich

## Patentansprüche

1. Rückhaltesystem für einen Fahrer eines Fahrzeugs (2), insbesondere eines Flurförderfahrzeugs, wobei das Rückhaltesystem (1) mindestens einen Schutzbügel (10) aufweist, der um eine in etwa horizontale Schwenkachse (9) zwischen einer dem Fahrer im Fahrzeug (2) haltenden Rückhaltestellung und einer ein Ein- und Aussteigen ermöglichenden Freigabestellung verschwenkbar ist, wobei im Bereich einer Schulter des Fahrers mindestens ein fahrzeugfester Schulterschutz (15) vorgesehen ist, der zumindest in einem in axialer Projektion betrachteten Überlappungsbereich (20) zwischen dem mindestens einen Schulterschutz (15) und dem mindestens einen sich in der Freigabestellung befindenden Schutzbügel (10) axial vom mindestens einen Schutzbügel (10) beabstandet ist, **dadurch gekennzeichnet, dass** der mindestens eine Schülterschutz (15) mindestens ein Netz, mindestens ein Gitter, mindestens eine Scheibe und/oder mindestens einen gekrümmten oder abgewinkelten Abschnitt (17) aufweisenden Bügel aufweist.

2. Rückhaltesystem nach Anspruch 1, **dadurch gekennzeichnet, dass** der mindestens eine Schulterschutz (15) nahe der Schwenkachse (9) festgelegt ist.

3. Rückhaltesystem nach Anspruch 1 oder 2, **dadurch gekennzeichnet, dass** sich der mindestens eine Schulterschutz (15) von einem Festlegungspunkt (16) schräg nach oben und vorne erstreckt.

4. Rückhaltesystem nach mindestens einem der Ansprüche 1 bis 3, **dadurch gekennzeichnet, dass** der mindestens eine Schulterschutz (15) mindestens ein freies Ende (18) aufweist, von dem aus er sich im Wesentlichen nach vorne erstreckt.

5. Rückhaltesystem nach mindestens einem der Ansprüche 1 bis 4, **dadurch gekennzeichnet, dass** der mindestens eine Schutzbügel (10) mindestens eine Abkröpfung (19) aufweist, um eine axiale Beabstandung vom mindestens einen Schulterschutz (15) im Überlappungsbereich (20) zu realisieren.

6. Rückhaltesystem nach Anspruch 5, **dadurch gekennzeichnet, dass** der mindestens eine Schutzbügel (10) mindestens einen Punkt außerhalb des Überlappungsbereichs (20) aufweist, der in einer zur Schwenkachse (9) senkrechten Ebene liegt, welche durch den mindestens einen Schulterschutz (15) verläuft.

## Claims

1. Restraint system for a driver of a vehicle (2), in particular of an industrial truck, wherein the restraint system (1) has at least one protective bar (10) which is pivotable about an approximately horizontal pivot axis (9) between a restraint position holding the driver in the vehicle (2) and a release position enabling entry and exit, wherein at least one vehicle-mounted shoulder guard (15) is provided in the region of a shoulder of the driver, said shoulder guard being spaced apart axially from the at least one protective bar (10) at least in an overlapping region (20), as viewed in axial projection, between the at least one shoulder guard (15) and the at least one protective bar (10) in the release position, **characterized in that** the at least one shoulder guard (15) has at least one net, at least one grid, at least one pane and/or at least one bar having a curved or angled portion (17).

2. Restraint system according to Claim 1, **characterized in that** the at least one shoulder guard (15) is secured in the vicinity of the pivot axis (9).

3. Restraint system according to Claim 1 or 2, **characterized in that** the at least one shoulder guard (15) extends obliquely upwards and forwards from a securing point (16).

4. Restraint system according to at least one of Claims 1 to 3, **characterized in that** the at least one shoulder guard (15) has at least one free end (18) from which said shoulder guard extends substantially forwards.

5. Restraint system according to at least one of Claims 1 to 4, **characterized in that** the at least one protective bar (10) has at least one elbow (19) in order to realize an axial spacing from the at least one shoulder guard (15) in the overlapping region (20).

6. Restraint system according to Claim 5, **characterized in that** the at least one protective bar (10) has at least one point outside the overlapping region (20) that lies in a plane which is perpendicular to the pivot axis (9) and runs through the at least one shoulder guard (15).

## Revendications

1. Système de retenue pour un conducteur d'un véhicule (2), notamment d'un chariot élévateur, le système de retenue (1) comportant au moins un étrier de protection (10) pouvant pivoter autour d'un axe de pivotement (9) approximativement horizontal entre une position de retenue maintenant le conducteur dans le véhicule (2) et une position de libération permettant la montée et descente du conducteur, au moins une protection d'épaule (15) fixée au véhicule étant prévue dans la région d'une épaule du conducteur, ladite protection étant espacée par rapport à au moins un étrier de protection (10) au moins dans une région de chevauchement (20) considérée en projection axiale entre l'au moins une protection d'épaule (15) et l'au moins un étrier de protection (10) se trouvant dans la position de libération dans le plan axial, **caractérisé en ce que** l'au moins une protection d'épaule (15) comporte au moins un étrier comportant un filet, au moins un grillage, au moins un disque et/ou au moins une section (17) coudée ou en angle.

2. Système de retenue selon la revendication 1, **caractérisé en ce que** l'au moins une protection d'épaule (15) est fixée à proximité de l'axe de pivotement (9).

3. Système de retenue selon la revendication 1 ou 2, **caractérisé en ce que** l'au moins une protection d'épaule (15) s'étend de façon oblique vers le haut et l'avant à partir d'un point de fixation (16).

4. Système de retenue selon au moins l'une quelconque des revendications 1 à 3, **caractérisé en ce que** l'au moins une protection d'épaule (15) comporte au moins une extrémité libre (18) d'où la protection s'étend pour l'essentiel vers l'avant.

5. Système de retenue selon au moins l'une quelconque des revendications 1 à 4, **caractérisé en ce que** l'au moins un étrier de protection (10) comporte au moins un coude (19) permettant de réaliser un écartement axial par rapport à au moins une protection d'épaule (15) dans la région de chevauchement (20).

6. Système de retenue selon la revendication 5, **caractérisé en ce que** l'au moins un étrier de protection (10) comporte au moins un point situé à l'extérieur de la région de chevauchement (20) reposant -dans un plan perpendiculaire à l'axe de pivotement (9) s'étendant à travers l'au moins une protection d'épaule (15).
